Europäisches Patentamt

European Patent Office

Office européen des brevets

(11) Veröffentlichungsnummer: **0 333 888**
**A1**

## (12) EUROPÄISCHE PATENTANMELDUNG

(21) Anmeldenummer: 88104455.6

(22) Anmeldetag: 21.03.88

(51) Int. Cl.4: **F16L 55/00** , **B23K 37/04** , **B25B 5/00**

(43) Veröffentlichungstag der Anmeldung:
27.09.89 Patentblatt 89/39

(84) Benannte Vertragsstaaten:
**BE DE ES FR GB IT NL SE**

(71) Anmelder: **SCHICHAU UNTERWESER AG**
**Werftstrasse 2**
**D-2850 Bremerhaven 21(DE)**

(72) Erfinder: **Hoffmann, Manfred**
**Regenstrasse 26**
**D-2850 Bremerhaven-Surheide(DE)**
Erfinder: **Pohl, Helmar**
**An der Alle 39**
**D-2850 Bremerhaven(DE)**
Erfinder: **Roge, Ulrich**
**Rotdornweg 4**
**D-2850 Bremerhaven(DE)**

(74) Vertreter: **Richter, Werdermann & Gerbaulet**
**Neuer Wall 10**
**D-2000 Hamburg 36(DE)**

(54) Verfahren und Vorrichtung zur Herstellung von Rohrleitungen mit einem vorgegebenen räumlichen Verlauf.

(57) Um ein Verfahren zur Herstellung von Rohrleitungen mit einem vorgegebenen räumlichen Verlauf, bei dem jeder ausgebildete Rohrleitungsabschnitt aus einzelnen geraden Rohrstücken mit zwischen den Rohrstücken angeordneten Krümmerstücken gebildet wird, so weiterzubilden, daß die Herstellung jedes Rohrleitungsabschnittes einfacher, wirtschaftlicher und schneller durchführbar ist, wobei insbesondere die Anwendung der bekannten Hilfsmaßnahmen und Hilfskonstruktionen für den Rohrschlosser entfallen soll und andererseits einfache Anwendungs- und Kontrollmaßnahmen vorgegeben werden sollen, die es ermöglichen, den auszubildenden räumlichen Verlauf des Rohrleitungsabschnittes äußerst präzise und unter Einhaltung der Nullochpositionen der Flansche durchzuführen, ist vorgesehen, daß das erste Rohrstück (50) in einer zu einer Nullinie (N), koaxialen Position angeordnet wird, daß das zweite Rohrstück (54) um einen Winkel ($\alpha$) in einer Horizontalebene (H) und um einen Winkel ($\beta$) in einer Vertikalebene (V1) verschwenkt angeordnet wird, daß das so in einer vorgegebenen räumlichen Neigung angeordnete Rohrstück (54) soweit verfahren wird, bis das zu verschweißende Rohrende (55) des zweiten Rohrstücks (54) unter Zwischenschaltung des Krümmers (58) eine zur Verschweißung mit dem Ende (51) des ersten Rohrstücks (50) geeignete Berührungsposition erreicht hat, und daß das erste Rohrstück (50) mit dem Krümmer (58) und das zweite Rohrstück mit dem Krümmer (58) verschweißt werden.

FIG. 1

## Verfahren und Vorrichtung zur Herstellung von Rohrleitungen mit einem vorgegebenen räumlichen Verlauf.

Die Erfindung betrifft ein Verfahren zur Herstellung von Rohrleitungen mit einem vorgegebenen Verlauf, bei dem jeder auszubildende Rohrleitungsabschnitt aus einzelnen geraden Rohrstücken mit zwischen den Rohrstücken angeordneten Krümmerstücken gebildet wird, indem ausgehend von einem jeweils ersten geraden Rohrstück, das in einer Ausgangsposition, ggf. bei Ausrichtung des Flansches in der Nullochposition angeordnet wird, ein zweites Rohrstück in eine vorgegebene X-Y-Z-Position räumlich angeordnet wird und über einen zwischen dem freien Ende des ersten Rohrstückes und dem dem ersten Rohrstück zugewandten Ende des zweiten Rohrstückes angeordneten Krümmer verbunden wird, indem das erste Rohrstück mit dem Krümmer und der Krümmer mit dem zweiten Rohrstück zusammengeheftet und anschließend geschweißt wird, und ggf. ein jeweils weiteres Rohrstück in der gleichen Weise an das zuletzt angeschweißte Rohrstück angesetzt wird, und dann an das freie Ende des zuletzt angeschweißten Rohrstückes ggf. ein Flansch in der Nullochposition angeschweißt wird, und eine Vorrichtung zur Durchführung eines solchen Verfahrens.

Derartige Verfahren zur Herstellung von Rohrleitungen werden insbesondere im Schiffbau angewandt, da zur Verringerung der Bauzeiten von Schiffen und zur optimalen Ausnutzung von Werkzeugen und Hilfswerkzeugen die Rohrleitungen eines Schiffes zunächst abschnittsweise außerhalb eines Schiffes erstellt und sodann im Schiff verlegt, d.h. an den vorgesehenen Flanschen verschraubt werden.

Zur Verrohrung von Schiffen wird dabei üblicherweise so vorgegangen, daß zunächst ein Maschinenraummodell angefertigt wird. Anhand dieses Modelles werden Pläne für die verschiedenen Rohrleitungen, die zwischen den einzelnen Lieferstellen und Verbraucher zu legen sind, erstellt. Diese Rohrleitungen werden dann ebenfalls zunächst im Modell verlegt. Von den Rohrleitungen werden dann sog. isometrische Zeichnungen erstellt, die dem Rohrschlosser als Bauvorlage dienen. Der außerhalb des Schiffes in einer Werkhalle od. dgl. tätige Rohrschlosser hat dann für die Herstellung eines Rohrabschnittes aus der isometrischen Zeichnung eine Angabe über den räumlichen Verlauf des Rohres und kann anhand der Maße ein entsprechendes Rohr ausbilden. Dies ist insbesondere bei einem komplizierten räumlichen Verlauf des Rohrabschnittes recht schwierig, da in der Werkstatt üblicherweise keine Hilfskonstruktionen zur Verfügung stehen, an denen das Rohr in seiner räumlichen Erstreckung gehalten werden

kann und insbesondere stehen innerhalb der Werkstatt keine Meßbezugspunkte zur Verfügung, so daß hier die verschiedensten Hilfskonstruktionen üblich sind.

Wenn der bekannte Rohrleitungsbau analysiert wird, dann ist festzustellen, daß im Rohrbau auf Schiffen als Rohr immer das Teilstück einer Rohrleitung bezeichnet wird, daß einen Rohrfertigungsabschnitt aus einem Leitungssystem bildet. Hierbei ist dann das über Muffen mit weiteren Teilstücken zu verbindende Teilstück gemeint oder der Abschnitt zwischen zwei Flanschverbindungen, wobei zu jedem Rohr dann jeweils zwei Flansche gehören.

Innerhalb jedes Fertigungsabschnittes kann jedoch das Rohr aus einzelnen geraden Abschnitten bestehen, die zueinander die unterschiedlichsten Winkel in der Horizontalebene bzw. in der Vertikalebene aufweisen. Es ist daher für den Rohrschlosser außerordentlich schwierig, derartige räumliche Gebilde unter der Verwendung der bekannten Hilfskonstruktionen nicht nur zu erstellen, sondern auch für eine entsprechende Genauigkeit Sorge zu tragen, die es anschließend ermöglicht, das fertige Rohr im Schiffskörper anzuordnen. Dabei ist noch von besonderer Bedeutung, daß die Flansche immer in einer sog. Nullochstellung angeordnet werden, damit eine problemlose Verbindung zwischen zwei Flanschen gewährleistet ist, indem immer die Bohrungen aufeinanderliegen. Aufgrund dieser hohen Anforderungen an den Rohrschlosser und den Rohrleitungsbau für Schiffe im allgemeinen zeigt es sich, daß der wirtschaftliche Aufwand bei der Herstellung ganz erheblich ist.

Es ist daher Aufgabe der vorliegenden Erfindung, ein Verfahren zur Herstellung von Rohrleitungen mit einem vorgegebenen räumlichen Verlauf der eingangs genannten Art so weiterzubilden, daß die Herstellung jedes Rohrleitungsabschnittes einfacher, wirtschaftlicher und schneller durchführbar ist, wobei insbesondere die Anwendung der bekannten Hilfsmaßnahmen und Hilfskonstruktionen für den Rohrschlosser entfallen soll und andererseits einfache Anwendungs- und Kontrollmaßnahmen vorgegeben werden sollen, die es ermöglichen, den auszubildenden räumlichen Verlauf des Rohrleitungsabschnittes äußerst präzise und unter Einhaltung der Nullochpositionen der Flansche durchzuführen.

Diese Aufgabe wird durch ein Verfahren der eingangs genannten Art gelöst, nachdem vorgesehen ist.

a) daß das Rohrstück in einer zu einer Nullinie, die als horizontale Gerade festgelegt wird, koaxialen Position angeordnet wird,

b) daß der Flansch in die Nullochposition ausgerichtet wird,

c) daß das zweite Rohrstück um einen Winkel α in einer Horizontalebene und um einen Winkel β in einer Vertikalebene verschwenkt angeordnet wird, wobei die Schnittgerade der Horizontalebene und der Vertikalebene mit der Nullinie parallel und die Horizontalebene und die Vertikalebene zueinander einen rechten Winkel aufweisen,

d) daß das so in einer vorgegebenen räumlichen Neigung angeordnete Rohrstück in einer zur Nullinie parallelen Horizontalrichtung sowie in einer zur parallelen Horizontalrichtung rechtwinkeligen Horizontalrichtung und in der Vertikalen soweit verfahren wird, bis das zu verschweißende Rohrende des zweiten Rohrstückes unter Zwischenschaltung des Krümmers eine zur Verschweißung mit dem Ende des ersten Rohrstückes geeignete Berührungsposition erreicht hat,

e) daß das erste Rohrstück mit dem Krümmer und das zweite Rohrstück mit dem Krümmer verschweißt werden,

f) daß der weitere Flansch um einen Winkel γ in der Vertikalebene und um einen Winkel δ in der Horizontalebene verschwenkt angeordnet wird, wobei die Schnittgerade der Horizontalebene und der Vertikalebene mit der Nullinie parallel und die Horizontalebene und die Vertikalebene zueinander einen rechten Winkel aufweisen,

g) daß der so in einer vorgegebenen räumlichen Neigung angeordnete Flansch in einer zur Nullinie parallelen Horizontalrichtung sowie in einer zu der parallelen Horizontalrichtung rechtwinkeligen Horizontalrichtung und in der Vertikalen so verfahren wird, bis der Flansch eine zur Verschweißung mit dem zuletzt angesprochenen Rohrstück geeignete Position erreicht hat, und

h) daß der Flansch in der Nullochposition angeschweißt wird.

Die Erfindung beruht dabei auf folgenden Überlegungen. Wenn das Anfangsstück eines Rohres - das zwischen zwei Flanschen immer aus geraden nicht gekrümmten Abschnitten mit dazwischen angeordneten Krümmern besteht - in eine sog. Nullinie gebracht wird, d.h., daß die Mittellinie des geraden Anfangsstückes koaxial zu der genannten Nullinie ist, wobei die Nullinie aus der Schnittlinie einer Vertikalebene und einer Horizontalebene gebildet wird, dann kann die Anordnung des sich anschließenden geraden Rohrstückes durch die Vorgabe von zwei Winkeln, nämlich durch einen Winkel zur Horizontalebene und durch einen Winkel zur Vertikalebene angegeben werden.

Wenn der Rohrfertigungsabschnitt nur aus geraden Rohrstücken und Krümmern besteht und Flansche nicht vorgesehen sind wie dies bei gemufften Rohren üblich ist, dann sind Herstellung des Fertigungsabschnittes natürlich nur die Schritte a) und c) bis e) notwendig.

Auch die Anordnung des nächsten sich ggf. anschließenden geraden Rohrabschnittes kann wiederum einfach die Angabe des Winkels zur Horizontalebene und des Winkels zur Vertikalebene definiert werden. So ist gem. einer bevorzugten Weiterbildung des Verfahrens vorgesehen,

e1) daß ein weiteres Rohrstück um einen Winkel α in einer Horizontalebene und um einen Winkel β in einer Vertikalebene verschwenkt angeordnet wird, wobei die Schnittgerade der Horizontalebene und der Vertikalebene mit der Nullinie parallel ist und die Horizontalebene und die Vertikalebene zueinander einen rechten Winkel aufweisen,

e2) daß das so in einer vorgegebenen räumlichen Neigung angeordnete Rohrstück in einer zur Nullinie parallelen Horizontalrichtung sowie in einer zu der parallelen Horizontalrichtung rechtwinkeligen Horizontalrichtung und in der Vertikalen soweit verfahren wird, bis das zu verschweißende Rohrende unter Zwischenschaltung eines geeigneten Krümmers eine zur Verschweißung mit dem zweiten Rohrstück geeignete Berührungsposition erreicht hat,

e3) daß das weitere Rohrstück mit dem vorhergehend angeschweißten Rohrstück verschweißt wird, und

e4) daß ggf. ein oder mehrere weitere Rohrstücke gem. e1) bis e3) angeschweißt werden.

Das bedeutet, daß dem Rohrschlosser nur noch die Längen der jeweils geraden Rohrabschnitte und deren jeweils zwei Neigungswinkel anzugeben sind, damit er einen Rohrabschnitt ausbilden kann. Durch die vorgebbare Angabe der räumlichen Neigung des Endflansches wird dann sichergestellt, daß auch der Endflansch in der sog. Nullochstellung angeordnet wird, wobei durch die Zusammenführung des Endflansches mit dem jeweils freien Ende des letzten Rohrabschnittes auch eine Kontrolle für den Rohrschlosser gegeben ist, da bei Beachtung der ihm vorgegebenen Daten eine problemlose Anpassung des Endflansches an das freie Ende durchführbar ist. Sofern hier Fehler auftreten, hat der Rohrschlosser sofort eine Information, daß entweder die ihm vorgegebenen Daten fehlerhaft sind oder daß die ihm vorgegebenen Daten von ihm falsch in eine räumliche Anordnung umgesetzt wurden.

Zur Durchführung des Verfahrens wird weiterhin eine Vorrichtung vorgeschlagen, bei der vorgesehen ist, daß

a) daß auf einer Grundplatte eine Rohrhalterungseinrichtung zur lösbaren Halterung eines ersten Rohrstückes angeordnet ist,

b) daß an einem Tragglied über eine Gelenkeinrichtung ein Rohrstücktragkopf um eine horizontale Achse und um eine vertikale Achse verschwenkbar angeordnet ist,

c) daß an einem weiteren Tragglied über eine Gelenkeinrichtung ein Flanschtragkopf um eine horizontale Achse und um eine vertikale Achse verschwenkbar angeordnet ist, und

d) daß das Tragglied und das weitere Tragglied relativ zur Grundplatte vertikal und horizontal verfahrbar angeordnet sind.

Der Grundgedanke besteht dabei darin, daß eine einfache Vorrichtung zur Durchführung des Verfahrens aus einer Grundplatte besteht, auf der das erste Rohrstück mit seiner neutralen Faser, d.h. mit seiner Mittellinie koaxial zu der vorgegebenen Nullinie fest anordbar ist, wobei an der Grundplatte ein von einem Grundgestell gebildeter Maschinenrahmen befestigt ist, an dem die Halterungsköpfe für das Rohrstück und den Flansch vertikal und horizontal verfahrbar gelagert sind, wobei die Halterungsköpfe derart gelenkig angeordnet sind, daß eine Einstellbarkeit unter vorgebenen Winkeln zur Horizontalebene und zur Vertikalebene durchführbar ist.

Die Benutzung der Vorrichtung erfolgt dabei in nachstehender Weise. Der erste Schritt besteht darin, daß das erste Rohrstück koaxial zu der vorgegebenen Nullinie in einer Rohrhalterungseinrichtung eingespannt wird. Dabei ist - soweit vorhanden - der Anfangsflansch in die Nullochstellung ausgerichtet. Aus den jetzt neuartig gestalteten und wesentlich vereinfachten Zeichnungen ergibt sich für den Rohrschlosser, welche Winkel das weitere Rohrteilstück zur Horizontalen und zur Vertikalen aufweisen muß und welche Länge es hat. Der Rohrschlosser muß nunmehr lediglich das neue Rohrstück bestimmter Länge in den Rohrstücktragkopf einsetzen und die vorgegebenen Winkel einstellen. Er kann dann das Tragglied horizontal und vertikal durch entsprechende Gleitbewegungen am Grundgestell so verfahren, bis das weitere Rohrstück in einer geeigneten Position zu dem in der Nullinie angeordneten ersten Rohrabschnitt befindlich ist. Hier kann dann ein vorgegebener Krümmer die notwendige Rohrverbindung herstellen, wobei bevorzugterweise schon von den Vorgaben her nur Krümmer bestimmter Winkel, insbesondere von 30°, 45° und 90° Verwendung finden. Der Rohrschlosser heftet dann den Rohrkrümmer und den weiteren Rohrabschnitt fest an und nimmt anschließend die entsprechende Verschweißung vor. Für das Ansetzen eines weiteren Rohrabschnittes wird dann der gleiche Vorgang wiederholt.

Für den Fall, daß der zu fertigende Rohrabschnitt Flansche aufweist, ist an dem Grundgestell oder an einem weiteren Gestell ein Flanschtragkopf angeordnet, der um eine horizontale Achse und um eine vertikale Achse verschwenkbar ist und mit dem der Endflansch des Rohres an den letzten angeordneten Rohrabschnitt herangeführt wird. Da hier wieder eine Winkeleinstellbarkeit in zwei Ebenen gegeben ist, kann z.B. bei Einstellung mit umgekehrten Vorzeichen desjenigen Winkelwertes, der für den zuletzt angesetzten Rohrabschnitt vorgesehen war, der Flansch automatisch in der Nullochstellung an den letzten Rohrabschnitt herangebracht werden. Durch das Anheften und Anschweißen des Flansches hat dann das gesamte Rohr seine gewünschte räumliche Gestalt. Bei einer einfachen Ausführung der Vorrichtung kann auch vorgesehen sein, daß die Vorrichtung lediglich ein Tragglied mit dem Rohrstücktraggkopf aufweist. In diesem Fall hat der Rohrschlosser dann ggf. lediglich für eine geeignete Anordnung des Flansches in konventioneller Weise Sorge zu tragen.

Bevorzugterweise kann auch vorgesehen werden, daß der Rohrstücktragkopf durch eine geeignete Umschaltung von Skalen od.dgl. auch für das Ansetzen des Flansches verwendbar ist, wobei auch ein parallel verfahrbarer oder auf der gegenüberliegenden Plattenseite verfahrbarer Maschinenrahmen mit gleichen Bestandteilen vorgesehen werden kann, wenn sichergestellt ist, daß der den Flansch tragende Halterungskopf zwar um die gleichen Winkelwerte, jedoch mit umgekehrten Vorzeichen als der letzte Rohrabschnitt angesetzt werden soll.

Bevorzugterweise ist für den Aufbau der Vorrichtung vorgesehen, daß im Bereich einer der Längskanten der im wesentlichen rechteckförmigen und einen Arbeitsbereich begrenzenden Grundplatte das Grundgestell vertikal angeordnet ist, das zueinander beabstandet angeordnete Vertikalträger und diese verbindenden Horizontalträger aufweist, wobei an dem Grundgestell das Tragglied und das weitere Tragglied angeordnet sind, wobei vorgesehen ist, daß an dem Grundgestell mindestens zwei horizontal angeordnete und vertikal zueinander beabstandete Gleitschienen ausgebildet sind, daß auf jeder Gleitschiene mindestens ein Gleitelement gleitbar angeordnet ist, daß je zwei Gleitelemente durch eine vertikale Tragschiene verbunden sind und diese haltern, daß an jeder vertikalen Tragschiene ein Tragwagen vertikal gleitbar gelagert ist, daß an jedem Tragwagen ein im rechten Winkel zum Grundgestell horizontal auskragender Tragbalken fest angeordnet ist, wobei auf dem Tragbalken in dessen Längsrichtung gleitbar das Tragglied und/oder das weitere Tragglied gehaltert ist, wobei zur Erleichterung der Handhabung vorgesehen sein sollte, daß das Gegengewicht ein Querschnittsprofil aufweist, das dem vom Steg und den Schenkeln der U-förmigen Tragschiene umschlossenen Innenquerschnitt entspricht und daß das Gegengewicht im Innenquerschnitt der Tragschiene geführt wird.

Mit einer derart ausgebildeten Vorrichtung ist das Verfahren in einfacher Weise durchführbar, da für den Rohrschlosser alle früher benötigten Hilfsmaßnahmen entfallen und ein zu fertigender Rohrabschnitt in kürzester Zeit erstellbar ist.

Bevorzugterweise wird dabei vorzusehen, daß die Gelenkeinrichtung eine Skalierung oder Meßwertanzeigeeinrichtung zur Anzeige des oder der Schwenkwinkel aus einer Null-Winkelposition aufweist. Auf diese Weise kann der Rohrschlosser die ihm vorgegebenen Winkelwerte direkt auf die Vorrichtung übertragen, so daß Meßfehler weitestgehend vermeidbar sind.

Gemäß einer weiteren bevorzugten Ausführungsform ist vorgesehen, daß zur Durchführung der Horizontalbewegung der Gleitelemente auf der Gleitschiene, der Vertikalbewegungen des Tragwagens auf der Tragschiene, der Horizontalbewegungen des Traggliedes auf dem Tragbalken und/oder der Winkelbewegungen des Rohrstücktragkopfes und des Flanschtragkopfes elektromotorische, pneumatische oder hydraulische Antriebseinrichtungen vorgesehen sind. Diese Ausbildung trägt nicht nur zur Erleichterung für den Rohrschlosser bei, sondern es ist auch davon auszugehen, daß die wünschten Einstellungen äußerst schnell und sicher erstellbar sind.

Wenn dann noch vorgesehen wird, daß die Vorrichtung ein Steuerwerk zur Steuerung aller Antriebseinrichtungen aufweist, kann davon ausgegangen werden, daß die Vorrichtung nicht nur in einfachster und bequemster Weise bedienbar ist, sondern daß auch Fehler insgesamt im weitesten Sinne eliminiert werden können. Es ist dabei auch denkbar, daß die Schweißvorgänge mit an sich bekannten automatischen Schweißvorrichtungen durchgeführt werden, so daß die Herstellung von Rohrleistungsabschnitten äußerst wirtschaftlich durchführbar ist, da der Rohrschlosser dann im wesentlichen noch Kontrollfunktionen übernimmt.

Im folgenden wird ein Ausführungsbeispiel einer erfindungsgemäßen Vorrichtung anhand der Zeichnungen erläutert. Es zeigt

Fig. 1 in einer Ansicht von vorne eine Vorrichtung mit einem eingespannten ersten Rohrstück und einem noch nicht ausgerichteten zweiten Rohrstück.

Fig. 2 in einer Teildarstellung die Vorrichtung gem. Fig.1 mit einem fertiggeschweißten Rohrabschnitt,

Fig. 3 in einer Teildarstellung gem. Fig. 1 in einer Ansicht von oben,

Fig. 4 in einer Seitenansicht die Vorrichtung gem. Fig.2,

Fig. 5 in einer Seitenansicht ein Tragglied mit einem im Rohrstücktragkopf gehalterden Rohrstück,

Fig. 6 in einer senkrecht geschnittenen Darstellung gem. Linie VI-VI in Fig.5 das Tragglied gem. Fig.5.

Fig. 7 in einer Seitendarstellung ein Tragglied mit einem Flanschtragkopf,

Fig. 8 in einer senkrecht geschnittenen Darstellung gem. Linie VIII-VIII in Fig.7 das Tragglied gem.Fig. 7,

Fig. 9 in einer Ansicht von vorne eine Klemmeinrichtung, und

Fig. 10 in einer Teildarstellung eine Hubeinrichtung in einer Ansicht von vorne.

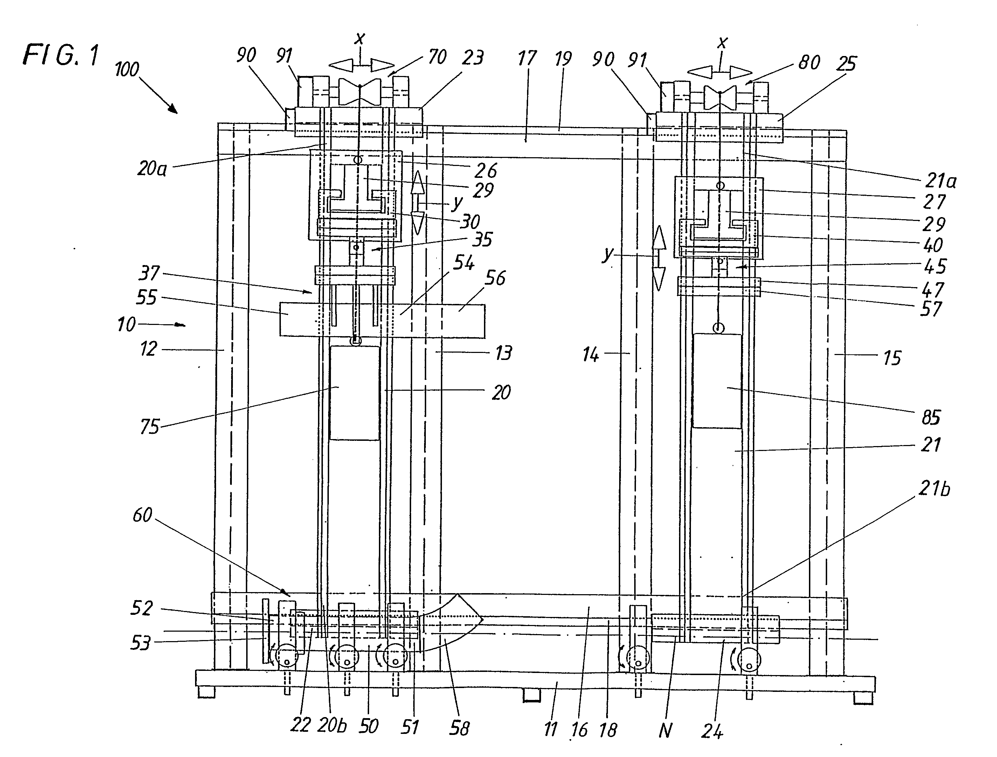

Die in den Fig. 1 bis 4 dargestellte Vorrichtung 100 besteht aus einem Grundgestell 10, das fest mit einer Grundplatte 11 verbunden ist, die zusammen ein Maschinengestell bilden. Das Grundgestell 10 wird dabei von den Vertikalträgern 12,13,14,15 gebildet, die in ihrem oberen Bereich und in ihrem unteren Bereich durch die Horizontalträger 16,17 verbunden sind.

An dem Horizontalträger 16 ist eine Gleitschiene 18 und an dem Horizontalträger 17 eine Gleitschiene 19 ausgebildet, wobei auf der Gleitschiene 18 die Gleitelemente 22 und 24 und auf der Gleitschiene 19 die Gleitelemente 23,25 angeordnet sind, und auf der jeweiligen Gleitschiene in der horizontalen Längsrichtung der Gleitschiene gleitbar gehalten sind. Zwischen je zwei Gleitelementen 22,24;23,25 ist eine vertikale Tragschiene 20;21 angeordnet, wobei die Tragschiene 20 mit ihrem oberen Ende 20a mit dem Gleitelement 23 und mit ihrem unteren Ende 20b mit dem Gleitelement 22 und die Tragschiene 21 mit ihrem oberen Ende 21a mit dem Gleitelement 25 und mit ihrem unteren Ende 21b mit dem Gleitelement 24 fest verbunden ist, so daß die vertikalen Tragschienen 20,21 über die Gleitelemente 22,23 bzw. 24,25 auf den Gleitschienen 18,19 horizontal verfahrbar sind.

Die vertikalen Tragschienen 20;21 weisen ein etwa U-förmiges Profil auf, das aus dem Steg 20c;21c und den Schenkeln 20d;21d,20e;21e besteht.

Auf jeder Tragschiene 20;21 ist ein Tragwagen 26;27 verfahrbar angeordnet. Dieser kann vermittels geeigneter Roll- und Halterungseinrichtungen an den vertikalen Tragschienen gehalten sein. Es kann jedoch auch vorgesehen sein, daß der Tragwagen 26;27 die Tragschiene 20;21 umfassend auf dieser gleitbar gehalten ist. Wesentlich ist dabei, daß eine Vertikalbewegung des Tragwagens 26,27 entlang der Tragschienen 20,21 auch unter Belastung durchführbar ist.

An jedem Tragwagen 26,27 ist ein im rechten Winkel zum Grundgestell 10 horizontal auskragender Tragbalken 28,29 fest angeordnet, wobei auf jedem Tragbalken 28,29 in dessen Längsrichtung gleitbar das Tragglied 30 und/oder das weitere Tragglied 40 gehalten ist.

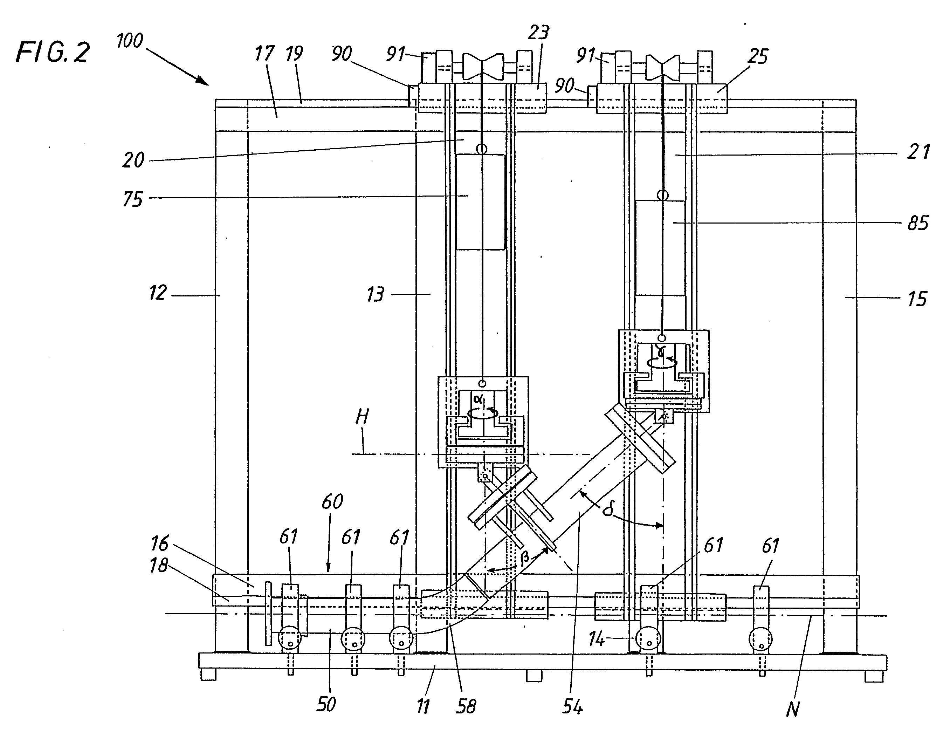

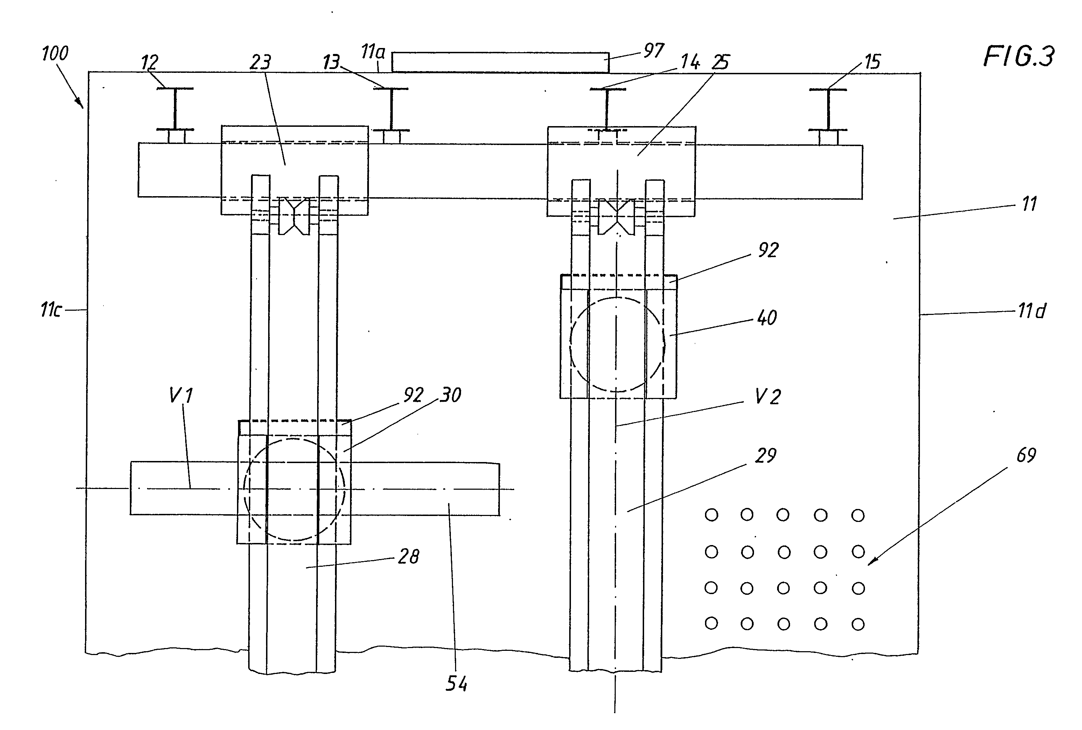

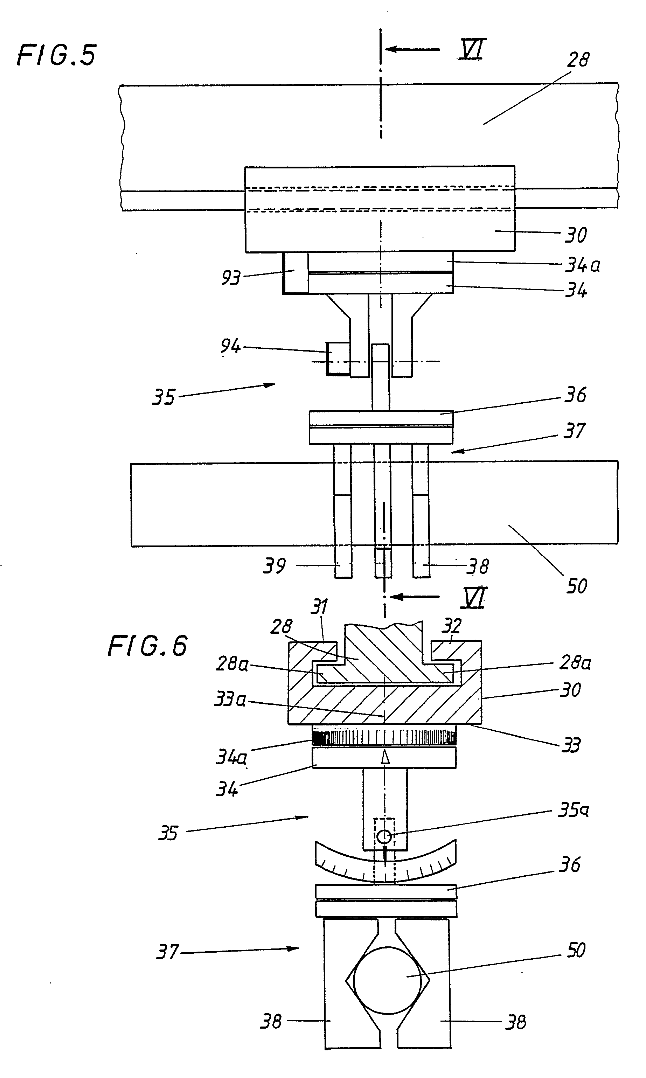

Wie sich aus den Detaildarstellungen in Fig.5 und Fig.6 ergibt, weist der Tragbalken 28 ein umgedreht angeordnetes T-Profil auf, dessen Quersteg (28a) von dem ein U-förmiges Profil mit zusätzlichen nach innen gerichteten Schenkeln 31,32 aufweisenden Tragglied umfaßt und auf diesem in Horizontalrichtung gleitbar gehalten ist. Im Bereich des Steges 33 des Traggliedes 30 ist zur Ausbildung der Gelenkeinrichtung 35 etwa mittig und um eine Vertikalachse 33a drehbar eine Gleitscheibe 34 angeordnet, wobei zwischen dem Steg 33 und der Gleitscheibe 34 noch eine reibungsmindernde Zwischenscheibe 34a angeordnet sein kann. An der Gleitscheibe 34 ist eine Tragscheibe 36 derart gelenkig angeordnet, daß eine Verschwenkbewegung der Tragscheibe 36 gegenüber der Gleitscheibe 34 um eine Horizontalachse 35a durchführbar ist. An der Tragscheibe 36 ist der in geeigneter Weise ausgebildete Rohrstücktragkopf 37 angeordnet, der beispielsweise die in der Zeichnung dargestellten Klemmhalterungen 38,39 aufweisen kann. Die Gelenkeinrichtung 35 ist dabei entweder selbsthemmend oder feststellbar ausgebildet, so daß eine vorgegebene Verschwenkung um einen winkel $\beta$ (Fig.2) auch unter Belastung beigehalten wird. Ebenso ist das durch die Gleitscheibe 34 auf dem Steg 33 um die Vertikalachse 33a drehbare Drehgelenk selbsthemmend oder feststellbar ausgebildet, so daß ein eingestellter Drehwinkel $\alpha$ (Fig.2) auch unter Belastung beibehalten wird.

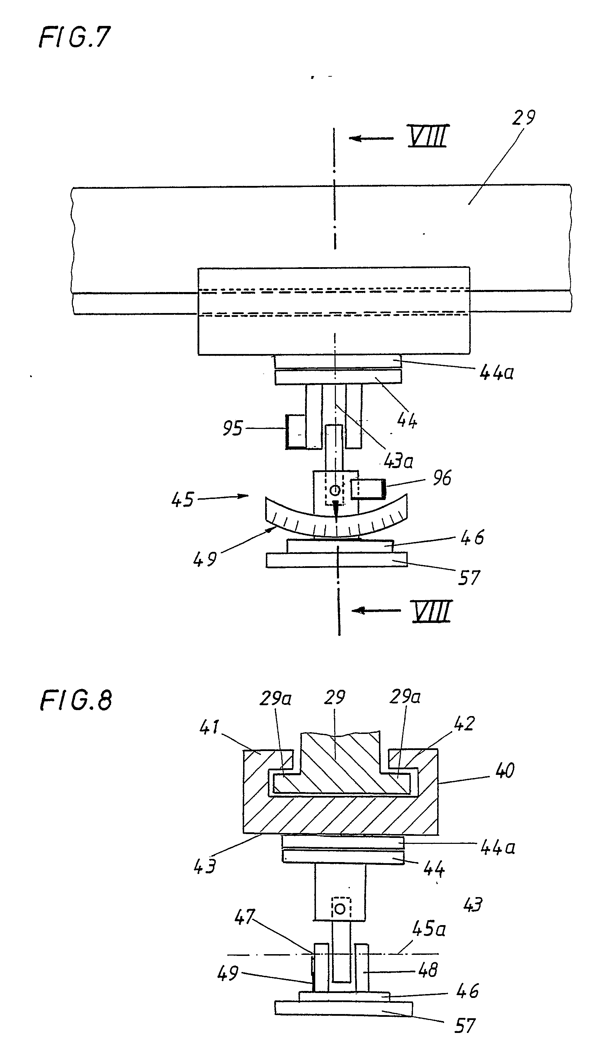

Das in den Fig. 7 und 8 detailliert dargestellte Tragglied 40 ist als U-förmiger Profilkörper mit zusätzlichen nach innen gerichteten Schenkeln 41,42 ausgebildet, der den Quersteg 29a des T-förmigen Tragbalkens 29 umfaßt und auf diesem in Längsrichtung gleitbar ist. An der Stegaußenseite 43 des Traggliedes 40 ist zur Ausbildung der Gelenkeinrichtung 45 etwa mittig und um eine Vertikalachse 43a drehbar eine Gleitscheibe 44 angeordnet, wobei zwischen dem Steg 43 und der Gleitscheibe 44 noch eine reibungsmindernde Zwischenscheibe 43a angeordnet sein kann. An der Gleitscheibe 44 ist ein Flanschtragkopf 46 derart gelenkig angeordnet, daß eine Verschwenkbewegung des Flanschtragkopfes 46 gegenüber der Gleitscheibe 44 um eine Horizontalachse 45a durchführbar ist. Die Gelenkeinrichtung 45 ist dabei entweder selbsthemmend oder feststellbar ausgebildet, so daß eine vorgegebene Verschwenkung um einen Winkel $\delta$ (= -$\beta$) (Fig.2) auch unter Belastung beigehalten wird. Ebenso ist das durch die Gleitscheibe 44 auf dem Steg 43 um die Vertikalachse 43a drehbare Drehgelenk selbsthemmend oder feststellbar ausgebildet, so daß ein eingestellter Drehwinkel $\gamma$ (= -$\alpha$) (Fig.2) auch unter Belastung beigehalten wird.

Nachdem in der Rohrhalterung 60 ein erstes Rohrstück 50 mit seiner neutralen Faser koaxial zur Nullinie N eingespannt ist, wo zwei das freie Ende 51 über den in der Zeichnung zweiteilig dargestellten Krümmer 58 mit einem weiteren Rohrstück 54 verbunden werden soll, während das andere Ende 52 den ersten Flansch 53 in seiner Nullochstellung trägt, kann das weitere Rohrstück 54 im Rohrstücktragkopf 37 eingespannt werden (Fig.1) und sodann in die gewünschte Winkelstellung gebracht bzw. verfahren werden, wie dies in Fig. 2 dargestellt ist. Das freie Ende 55 des Rohrstückes 54 wird dann mit dem Krümmerstück 58 verschweißt, während auf das andere freie Ende 56 des zweiten Rohrstückes 54 der im Flanschtragkopf 49 gehaltene zweite Flansch 57 auf das freie Ende 56 des Rohrstückes 54 in der gewünschten Winkelstellung $\gamma$, $\delta$ aufgesetzt und angeschweißt wird.

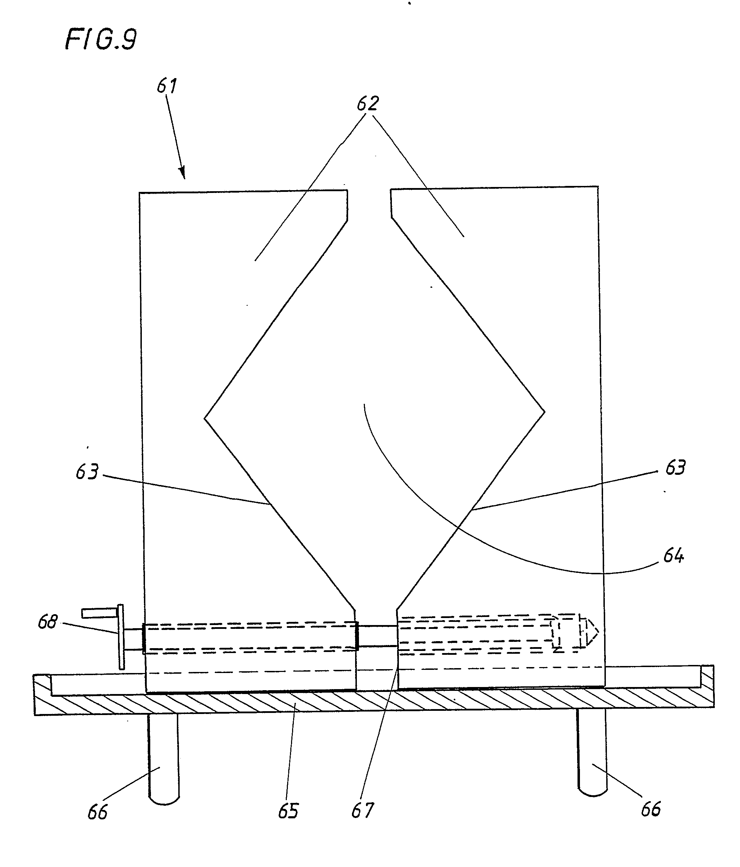

Die Rohrhalterung 60 besteht dabei aus Klemmeinrichtungen 61, wie diese beispielhaft in Fig.9 dargestellt sind. Dabei wird die Klemmeinrichtung 61 von zwei nach Art einer Schraubzwinge aufeinanderzubewegbaren Klemmbacken 62 gebildet, die jeweils eine etwa dreieckförmige Einziehung 63 aufweisen, so daß sich bei weitgehenst aufeinanderzubewegten Klemmbacken 62 eine Durchtrittsöffnung 64 mit einem etwa viereckigen Querschnitt ergibt, so daß ein in diese eingestecktes - in der Zeichnung nicht dargestelltes - Rohr selbstzentrierend gehalten wird.

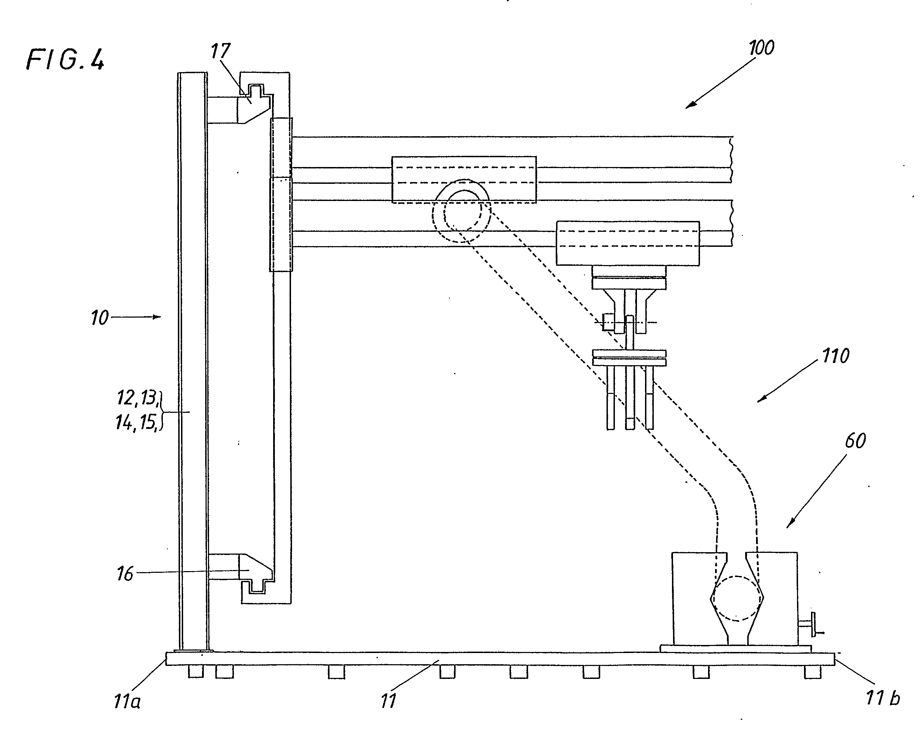

Die Klemmbacken 62 sind dabei in einem führungsschienenaufweisenden Grundkörper 65 gehalten, der mit entsprechenden Steckbolzen 66 an seiner Unterseite versehen ist, mit denen er in entsprechende - in der Fig.9 nicht dargestellt-Durchgangsbohrungen 69 in der Grundplatte 11 einsteckbar ist. Die Klemmbacken 62 sind dabei über einen mit einem Handrad 68 betreibbaren Spindeltrieb 67 aufeinanderzu- bzw. voneinanderwegbewegbar, so daß in der Durchtrittsöffnung 64 Rohre nahezu beliebiger Größe jeweils mit der neutralen Faser auf der Nullinie N liegend feststellbar sind. Für die Aufnahme der Steckbolzen 66 sind in der Grundplatte 11 Bohrungen 69 vorgesehen, die in Fig.3 beispielhaft und partiell dargestellt sind. Die Grundplatte 11 ist dabei mit einem Raster von Bohrungen 69 versehen, um an jeder beliebigen geeigneten Stelle eine Nullinie N auszubilden.

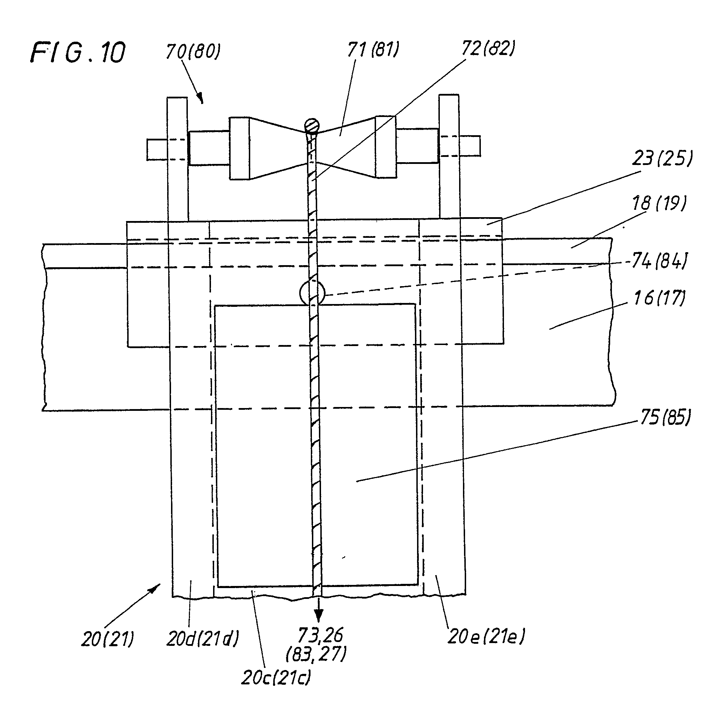

Der Tragwagen 26;27 ist über eine Hubeinrichtung 70;80 auf der jeweiligen Tragschiene 20;21 verfahrbar. In Fig. 10 ist beispielhaft die Hubeinrichtung 70 dargestellt, die aus einer auf dem Gleitelement 23 frei drehbar angeordneten Umlenkrolle 71 besteht, um die ein als Zugelement 22 dienendes Seil herumgelegt ist, dessen eines Ende 73 - in der Zeichnung nicht dargestellt - am Tragwagen 26 befestigt ist, während das andere Ende 74 das Gegengewicht 75 trägt, wobei das Gegengewicht 75 eine geeignete geometrische Ausformung aufweist und einen Querschnitt aufweist, der dem vom Steg 20c und den Schenkeln 20d,20e der U-förmigen Tragschiene 20 umschlossenen Innenquerschnitt entspricht, so daß das Gegengewicht 75 in der Tragschiene 20 bei seiner Horizontalbewegung geführt wird. Die Hubeinrichtung 80 für den Tragwagen 27 weist einen entsprechenden Aufbau auf, was durch die in der Zeichnung in Klammern dargestellten Bezugszeichen für die Hubeinrichtung 80, die Umlenkrolle 81, das Gleitelement 25, das Zugelement 82, die Enden 83,84 des Zugelementes 82 und das Gegengewicht 85 angedeutet ist.

Zur Vereinfachung der Bedienung der Vorrichtung können die Gleitelemente 23,25 mit Antriebseinrichtungen 90 für die Durchführung eines Verfahrens der Gleitelemente 23,25 in die mit X gekennzeichnete Richtung und die Hubeinrichtungen 70,80 zum Verfahren der Tragwagen 26,27 in die mit Y gekennzeichnete Richtung versehen sein (Fig.1). Auch kann vorgesehen werden, die Tragglieder 30,40 über entsprechende translatorische Antriebe 92 zu verfahren. Die Winkelverstellung der Gelenkeinrichtungen 35,45 wird über die in den Fig. 5 und7 angedeuteten Antriebs- bzw. Verstelleinrichtungen 93,94 bzw. 95,96 durchgeführt, wobei alle Antriebseinrichtungen 90 bis 96 je nach Art der zur Verfügung stehenden Energie und der. gewünschten Steuerung als elektrische, pneumatische oder hydraulische Antriebe bzw. Verstellmotoren ausgebildet sein können. Bevorzugterweise ist vorgesehen, daß die Vorrichtung mit einem Steuerwerk 97 (Fig.3) versehen wird, mit dem die einzelnen Antriebseinrichtungen und Verstellmotoren koordiniert steuerbar sind, um die Vorrichtung innerhalb eines halbautomatisierten oder vollautomatisierten Ablaufs einzusetzen und Fehler und Gefährdungen aufgrund von Fehlbedienungen durch Bedienpersonen möglichst weitgehend auszuschließen.

Die Erfindung ist nicht beschränkt auf die voranstehend dargestellte und beschriebene Ausführungsform. Abwandlungen im Aufbau zur Erreichung der gleichen mechanischen Bewegungen und Verstellbarkeiten liegen ebenso im Rahmen der Erfindung wie eine andere Anordnung der einzelnen Elemente zueinander, wobei eine besonders vorteilhafte, jedoch in den Zeichnungen nicht dargestellte Weiterbildung der Erfindung in der Anordnung des ersten Traggliedes und des weiteren Traggliedes an einem gemeinsamen Tragbalken besteht.

## Ansprüche

1. Verfahren zur Herstellung von Rohrleitungen mit einem vorgegebenen räumlichen Verlauf, bei dem jeder auszubildende Rohrleitungsabschnitt aus einzelnen geraden Rohrstücken mit zwischen den Rohrstücken angeordneten Krümmerstücken gebildet wird, indem ausgehend von einem jeweils ersten geraden Rohrstück, das in einer Ausgangsposition, ggf. bei Ausrichtung des Flansches in der Nullochposition angeordnet wird, ein zweites Rohrstück in eine vorgegebene X-Y-Z-Position räumlich angeordnet wird und über einen zwischen dem freien Ende des ersten Rohrstückes und dem dem ersten Rohrstück zugewandten Ende des zweiten Rohrstückes angeordneten Krümmer verbunden wird, indem das erste Rohrstück mit dem Krümmer und der Krümmer mit dem zweiten Rohrstück zusammengeheftet und anschließend geschweißt wird, und ggf. ein jeweils weiteres Rohrstück in der gleichen Weise an das zuletzt angeschweißte Rohrstück angesetzt wird, und dann an das freie Ende des zuletzt angeschweißten Rohrstückes ggf. ein Flansch in der Nullochposition angeschweißt wird, und eine Vorrichtung zur Durchführung eines solchen Verfahrens, dadurch gekennzeichnet,

a) daß das erste Rohrstück (50) in einer zu einer Nullinie (N), die als horizontale Gerade festgelegt wird, koaxialen Position angeordnet wird,

b) daß der Flansch (53) in die Nullochposition ausgerichtet wird,

c) daß das zweite Rohrstück (54) um einen Winkel ($\alpha$) in einer Horizontalebene (H) und um einen Winkel ($\beta$) in einer Vertikalebene (V1) verschwenkt angeordnet wird, wobei die Schnittgerade der Horizontalebene (H) und der Vertikalebene (V1) mit der Nullinie (N) parallel und die Horizontalebene (H) und die Vertikalebene (V1) zueinander einen rechten Winkel aufweisen,

d) daß das so in einer vorgegebenen räumlichen Neigung angeordnete Rohrstück (54) in einer zur Nullinie (N) parallelen Horizontalrichtung sowie in einer zur parallelen Horizontalrichtung rechtwinkligen Horizontalrichtung und in der Vertikalen soweit verfahren wird, bis das zu verschweißende Rohrende (55) des zweiten Rohrstücks (54) unter Zwischenschaltung des Krümmers (58,59) eine zur Verschweißung mit dem Ende (51) des ersten Rohrstücks (50) geeignete Berührungsposition erreicht hat,

e) daß das erste Rohrstück (50) mit dem einen Kümmerende des Krümmers (58) und das zweite Rohrstück mit dem anderen Krümmerende des Krümmers (58) verschweißt werden,

f) daß der weitere Flansch (57) um einen Winkel ($\gamma$) in der Vertikalebene (V1) und um einen Winkel ($\delta$) in der Horizontalebene verschwenkt angeordnet wird, wobei die Schnittgerade der Horizontalebene (H) und der Vertikalebene (V1) mit der Nullinie (N) parallel und die Horizontalebene (H) und die Vertikalebene (V1) zueinander einen rechten Winkel aufweisen,

g) daß der so in einer vorgegebenen räumlichen Neigung angeordnete Flansch (57) in einer zur Nullinie (N) parallelen Horizontalrichtung sowie in einer zu der parallelen Horizontalrichtung rechtwinkeligen Horizontalrichtung und in der Vertikalen so verfahren wird, bis der Flansch (57) eine zur Verschweißung mit dem zuletzt angesprochenen Rohrstück (54) geeignete Position erreicht hat, und

h) daß der Flansch (57) in der Nullochposition angeschweißt wird.

2. Verfahren nach Anspruch 1, dadurch gekennzeichnet, daß nach dem Schritt d) und vor dem Schritt e) folgende Schritte durchgeführt werden:

e1) daß ein weiteres Rohrstück um einen Winkel (α) in einer Horizontalebene (H) und um einen Winkel (β) in einer Vertikalebene (V1) verschwenkt angeordnet wird, wobei die Nullinie (N) mit der Schnittgeraden der Horizontalebene (H) und der Vertikalebene (V1) koaxial ist und die Horizontalebene (H) und die Vertikalebene (V1) zueinander einen rechten Winkel aufweisen,

e2) daß das so in einer vorgegebenen räumlichen Neigung angeordnete Rohrstück in einer zur Nullinie (N) parallelen Horizontalrichtung sowie in einer zu der parallelen Horizontalrichtung rechtwinkeligen Horizontalrichtung und in der Vertikalen soweit verfahren wird, bis das zu verschweißende Rohrende unter Zwischenschaltung eines geeigneten Krümmers eine zur Verschweißung mit dem zweiten Rohrstück geeignete Berührungsposition erreicht hat.

e3) daß das weitere Rohrstück mit dem vorhergehend angeschweißten Rohrstück verschweißt wird, und

e4) daß ggf. ein oder mehrere weitere Rohrstücke gem. e1) bis e3) angeschweißt werden.

3. Vorrichtung zur Durchführung des Verfahrens nach Anspruch 1, dadurch gekennzeichnet,

a) daß auf einer Grundplatte (11) eine Rohrhalterungseinrichtung (60) zur lösbaren Halterung eines ersten Rohrstückes (50) angeordnet ist,

b) daß an einem Tragglied (30) über eine Gelenkeinrichtung (35) ein Rohrstücktragkopf (37) um eine horizontale Achse (35a) und um eine vertikale Achse (33a) verschwenkbar angeordnet ist,

c) daß an einem weiteren Tragglied (40) über eine Gelenkeinrichtung (45) ein Flanschtragkopf (49) um eine horizontale Achse (45a) und eine vertikale Achse (43a) verschwenkbar angeordnet ist, und

d) daß das Tragglied (30) und das weitere Tragglied (40) relativ zur Grundplatte (11) vertikal und horizontal verfahrbar angeordnet sind.

4. Vorrichtung nach Anspruch 3, dadurch gekennzeichnet, daß im Bereich einer der Längskanten (11a, 11b,11c,11d) der im wesentlichen rechteckförmigen und einen Arbeitsbereich (110) begrenzenden Grundplatte (11) das Grundgestell (10) vertikal angeordnet ist, das zueinander beabstandet angeordnete Vertikalträger (12,13,14,15) und diese verbindenden Horizontalträger (16,17) aufweist, wobei an dem Grundgestell (10) das Tragglied (30) und das weitere Tragglied (40) angeordnet sind.

5. Vorrichtung nach Anspruch 4, dadurch gekennzeichnet, daß an dem Grundgestell (10) mindestens zwei horizontal angeordnete und vertikal zueinander beabstandete Gleitschienen (18,19) ausgebildet sind, daß auf jeder Gleitschiene (18,19) mindestens ein Gleitelement (22,23,24,25) gleitbar angeordnet ist, daß je zwei Gleitelemente (22,23;24,25) durch eine vertikale Tragschiene (20;21) verbunden sind und diese haltern, daß an jeder vertikalen Tragschiene (20;21) ein Tragwagen (26;27) vertikal gleitbar gelagert ist, daß an jedem Tragwagen (26;27) ein im rechten Winkel zum Grundgestell (10) horizontal auskragender Tragbalken (28;29) fest angeordnet ist, wobei auf dem Tragbalken (28;29) in dessen Längsrichtung gleitbar das Tragglied (30) und/oder das weitere Tragglied (40) gehaltert ist.

6. Vorrichtung nach Anspruch 5, dadurch gekennzeichnet, daß auf jedem oberen Gleitelement (23;25) zur Ausbildung einer Hubeinrichtung (70;80) für die vertikale Auf- und Abbewegung des Tragwagens (26;27) eine Umlenkrolle (71;81) frei drehbar gelagert ist, über die ein Zugelement (72;82) wie ein Seil, eine Kette od.dgl. umgelenkt wird, wobei ein Ende (73;83) des Zugelementes (72;82) am Tragwagen (26;27) befestigt ist, und das andere Ende (74;84) an einem Gegengewicht (75;85) befestigt ist, dessen Masse in etwa der Masse des Tragwagens (26;27), des Tragbalkens (28;29), des Traggliedes (30;40) und des Rohrstücktragkopfes (37) bzw. des Flanschtragkopfes (49) entspricht.

7. Vorrichtung nach Anspruch 6, dadurch gekennzeichnet, daß das Gegengewicht (75;85) ein Querschnittsprofil aufweist, das dem vom Steg (20c;21C) und den Schenkeln (20d;21d,20e;21e) der U-förmigen Tragschiene (20;21) umschlossenen Innenquerschnitt entspricht und daß das Gegengewicht (75;85) im Innenquerschnitt der Tragschiene (20;21) geführt wird.

8. Vorrichtung nach einem der Ansprüche 3 bis 7, dadurch gekennzeichnet, daß die Gelenkeinrichtung (35;45) eine Skalierung oder Meßwertanzeigeeinrichtung zur Anzeige des oder der Schwenkwinkel (α,β,γ,δ) aus einer Null-Winkelposition aufweist.

9. Vorrichtung nach einem der Ansprüche 3 bis 8, dadurch gekennzeichnet, daß zur Durchführung der Horizontalbewegung der Gleitelemente (22,23; 24,25) auf der Gleitschiene (18;19), der Vertikalbewegungen des Tragwagens (26;27) auf der Tragschiene (20;21), der Horizontalbewegungen des Traggliedes (30;40) auf dem Tragbalken (28;29) und/oder der Winkelbewegungen des Rohrstücktragkopfes (37) und des Flanschtragkopfes (49) elektromotorische, pneumatische oder hydraulische Antriebseinrichtungen (90,91,92,93, 94,95,96) vorgesehen sind.

10. Vorrichtung nach Anspruch 9, dadurch gekennzeichnet, daß die Vorrichtung (100) ein Steuerwerk (97) zur Steuerung aller Antriebseinrichtungen (90,91,92,93,94,95,96) aufweist.

FIG. 1

EP 0 333 888 A1

FIG.2

EP 0 333 888 A1

*FIG.3*

100
12    23    13    11a    97    14    25    15
11
92
40
11c
11d
V1    92    30    V2    29
28    69
54

EP 0 333 888 A1

FIG.4

17

100

10

12,13,
14,15,

16

110

60

11a

11

11 b

EP 0 333 888 A1

FIG.5

28

30

34a

34

93

94

35

36

37

39

38

50

VI

FIG.6

31

28

32

28a

28a

30

33a

33

34a

34

35

35a

36

37

50

38

38

EP 0 333 888 A1

FIG.7

VIII

29

44a

95

44

43a

96

45

49

46

57

VIII

FIG.8

41

29a

29

29a

42

43

40

44a

44

43

47

45a

49

48

46

57

FIG.9

FIG.10

70(80)　71(81)　72(82)

23(25)
18(19)
74(84)
16(17)
75(85)

20(21)　20d(21d)　73,26
(83,27)
20c(21c)　　20e(21e)

Europäisches
Patentamt

**EUROPÄISCHER RECHERCHENBERICHT**

Nummer der Anmeldung

EP 88 10 4455

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 772 753 (SARGEANT)<br>* Seite 1, Zusammenfassung *<br>--- | 1 | F 16 L 55/00<br>B 23 K 37/04<br>B 25 B 5/00 |
| A | US-A-3 870 288 (McLARNON)<br>* Seite 1, Zusammenfassung *<br>----- | 1 | |

RECHERCHIERTE
SACHGEBIETE (Int. Cl.4)

F 16 L
B 23 K
B 25 B
B 29 C

Der vorliegende Recherchenbericht wurde für alle Patentansprüche erstellt

| Recherchenort | Abschlußdatum der Recherche | Prüfer |
|---|---|---|
| DEN HAAG | 18-11-1988 | HUBEAU M.G. |